# EUROPEAN PATENT APPLICATION

(11) **EP 4 641 937 A1**
(43) Date of publication of application: **29.10.2025**
(21) Application number: 25171830.0
(22) Date of filing: 22.04.2025
(51) Int. Cl.: H04B 3/56

(54) **SMART SOCKET AND ADAPTER FOR OPTIMIZING THE QUALITY OF DOMESTIC POWER LINE COMMUNICATION**

(30) Priority: 24.04.2024 TW 113115338
(71) Applicant: HK Oceancomm Technology Co., Limited, Hong Kong (HK)
(72) Inventor: ZHANG, YONG-LIN, Zhubei City (TW); LIN, JUNN-YI, Zhubei City (TW); LI, HSIN-HSIEN, Zhubei City (TW)
(74) Representative: Lang, Christian

(57) **Abstract**

The present invention discloses a smart socket and adapter for optimizing the quality of domestic power line communication. The smart socket features first and second circuit paths coupled to a power grid. The first path includes an isolator; the second bypasses it. A circuit path switch selects the path based on whether an inserted plug is conventional or smart. For the conventional plug, the switch selects the first path; the isolator filters noise from the connected conventional appliance, protecting PLC performance on the network. For the smart plug, the switch selects the second path, bypassing the isolator. This ensures the smart plug couples directly to the power grid, preventing its own PLC signals from being filtered by the isolator. The smart adapter incorporates similar principles, coupling via connector pins.

## Description

### FIELD OF THE INVENTION

This invention relates to smart sockets and smart adapters, specifically smart sockets and smart adapters designed for compatibility with legacy and smart electrical devices while enhancing Power Line Communication (PLC) quality within residential environments.

### DESCRIPTION OF RELATED ART

Currently known smart sockets and conventional sockets have only a single circuit path. Therefore, when used with conventional appliances, noise from these appliances can enter the power line, degrading Power Line Communication (PLC) quality and interfering with the communication of smart appliances on the power line.

### SUMMARY OF THE INVENTION

The present invention provides a smart socket with two circuit paths.

The present invention provides a smart socket that switches circuit paths based on whether a smart plug or a conventional plug is inserted.

The present invention provides a circuit path between a conventional plug and the smart socket that includes an isolator.

The present invention provides a circuit path between a smart plug and the smart socket that does not include an isolator.

An embodiment of the present invention discloses a smart socket for optimizing the quality of domestic power line communication, comprising: a first circuit path coupled to a power grid, wherein an isolator is disposed on the first circuit path; a second circuit path coupled to the power grid, bypassing the isolator; and a circuit path switch configured to switch between the first circuit path and the second circuit path based on whether a plug inserted into the smart socket is a conventional plug or a smart plug; wherein, when the plug is the conventional plug, the circuit path switch switches to the first circuit path, and the isolator filters out noise generated by a conventional appliance via the conventional plug on the first circuit path; and when the plug is the smart plug, the circuit path switch switches to the second circuit path, which does not include the isolator, directly coupling the smart plug to the power grid.

An embodiment of the present invention discloses a smart adapter for optimizing the quality of domestic power line communication, comprising: a smart socket and a connector pin, wherein the smart socket comprises: a first circuit path coupled to the connector pin, wherein an isolator is disposed on the first circuit path; a second circuit path coupled to the connector pin, bypassing the isolator; and a circuit path switch configured to switch between the first circuit path and the second circuit path based on whether a plug inserted into the smart adapter is a conventional plug or a smart plug; wherein, when the plug is the conventional plug, the circuit path switch switches to the first circuit path, and the isolator filters out noise generated by a conventional appliance via the conventional plug on the first circuit path; and when the plug is the smart plug, the circuit path switch switches to the second circuit path, which does not include the isolator, directly coupling the smart plug to the connector pin.

### BRIEF DESCRIPTION OF DRAWINGS

Fig. 1 shows a schematic diagram of a smart socket according to an embodiment of the present invention.
Figs. 1-1 to 1-2 show schematic diagrams of the switching of a smart socket with a conventional plug (and conventional appliance) using an isolator, covering combinations of live and ground wires.
Figs. 2-1 to 2-2 show schematic diagrams of a smart adapter for optimizing power Line communication quality in an embodiment (used with a conventional plug).
Figs. 3-1 to 3-2 show schematic diagrams of a smart socket with a smart plug (and smart appliance) in an embodiment.
Figs. 4-1 to 4-2 show schematic diagrams of a smart adapter for optimizing power Line communication quality in an embodiment (used with a smart plug).
Fig. 5 shows a schematic diagram of the mechanism of a smart socket and a smart plug.
Fig. 5-1 shows a schematic diagram of the mechanism of a smart socket 500A and a smart plug.
Fig. 5-2 shows a schematic diagram of the mechanism of a smart adapter 500B and a smart plug.
Fig. 6-1 shows a schematic diagram of the mechanism of a smart socket 600A and a smart plug.
Fig. 6-2 shows a schematic diagram of the mechanism of a smart adapter 600B and a smart plug.

### DETAILED DESCRIPTION OF THE INVENTION

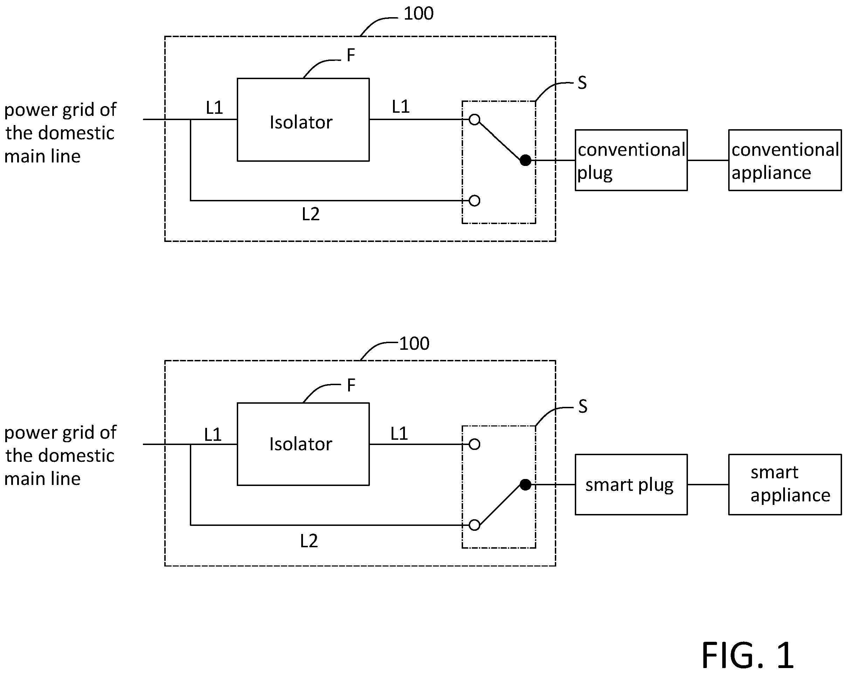

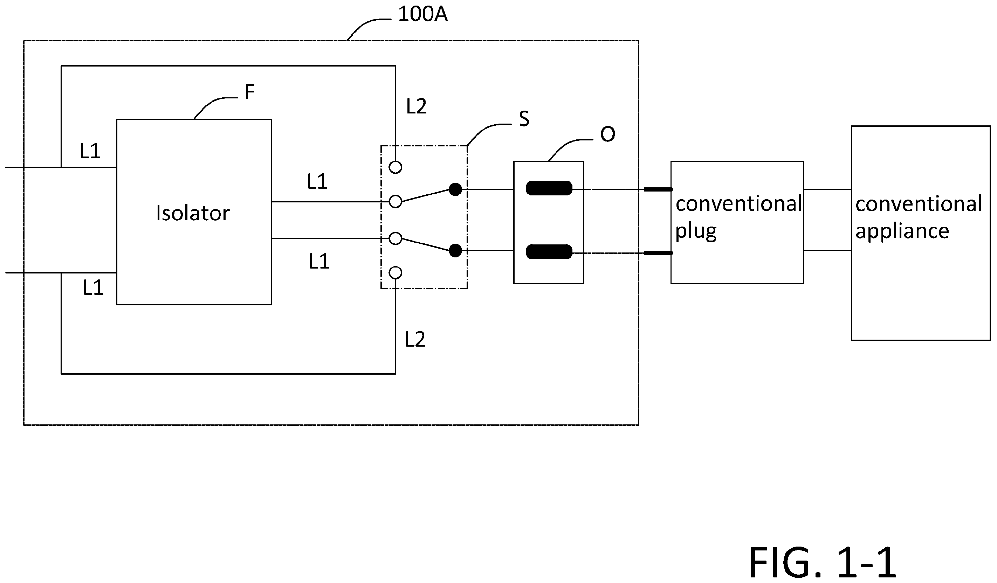

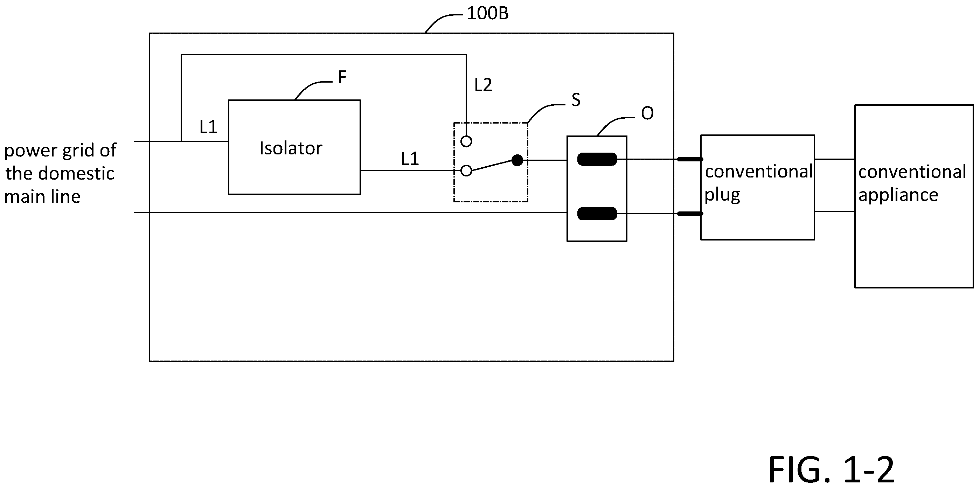

Please refer to Fig. 1, which shows a schematic diagram of a smart socket according to an embodiment of the present invention. The smart socket 100 includes a first circuit path L1, a second circuit path L2, and a circuit path switch S.

The first circuit path L1 and the second circuit path L2 are each coupled to the power grid of the domestic main line. Please note that an isolator F is disposed on the first circuit path L1, while no isolator F is disposed on the second circuit path L2. The circuit path switch S switches between the first circuit path L1 and the second circuit path L2 based on whether the plug inserted into the smart socket 100 is a conventional plug or a smart plug.

In this embodiment, when the plug is a conventional plug, the circuit path switch S switches to the first circuit path L1. The isolator F filters out noise generated by a conventional appliance via the conventional plug on the first circuit path L1, thereby preventing the noise from entering the power grid and interfering with communication among other smart appliances. When the plug is a smart plug, the circuit path switch S switches to the second circuit path L2. Since the second circuit path L2 does not include the isolator F, the smart plug is directly coupled to the power grid without passing through the isolator F. This prevents the communication signals from the smart appliance, transmitted via the smart plug, from being filtered out on the second circuit path L2.

Please note that the isolator F on the first circuit path L1 ensures that noise within the Power Line Communication (PLC) frequency band is suppressed, thereby preventing this noise from entering the domestic power grid or interfering with PLC performance via radiation through the grid. Additionally, it significantly reduces the output load of the PLC equipment, resulting in a substantial improvement in PLC transmission performance.

Referring to FIG. 1-1, FIG. 1-1 is a schematic diagram illustrating the use of the smart socket 100A with a conventional plug (connected to a conventional appliance) according to an embodiment. In this embodiment, the conventional plug is electrically connected to the socket outlet O of the smart socket 100A. Both the live wire and the ground wire of the conventional plug are coupled through the first circuit path L1 to the isolator F, and subsequently coupled to the power grid.

Additionally, the circuit path switch S can be implemented using various designs, such as mechanical, spring-based, or magnetism suction. The circuit path switch S can also allow for manual switching. Furthermore, the switching of the circuit path switch S can be controlled by a smart plug. Consequently, a conventional plug does not trigger the circuit path switch S to switch the circuit path, and therefore, the conventional plug is coupled through the first circuit path L1 to the isolator F.

Referring to FIG. 1-2, FIG. 1-2 is a schematic diagram illustrating the use of a smart socket with a conventional plug (connected to a conventional appliance) according to another embodiment. In this embodiment, only the ground wire of the conventional plug is coupled through the first circuit path L1 to the isolator F. The live wire, however, is directly coupled to the power grid, bypassing the isolator F (i.e., the live wire is not coupled to the isolator F). The remaining operational principles are the same as those previously described and will not be reiterated here.

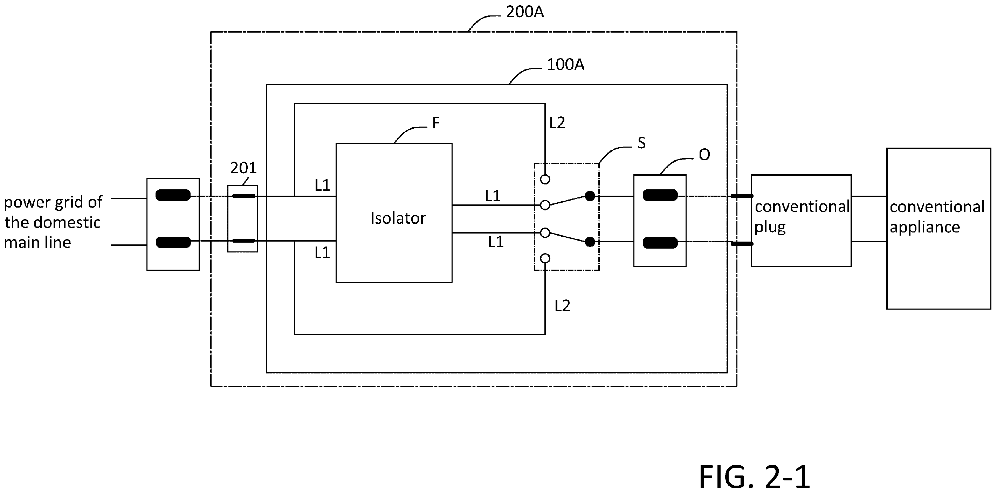

Referring to FIG. 2-1, FIG. 2-1 is a schematic diagram illustrating an embodiment of a smart adapter 200A for optimizing domestic power communication quality, shown in use with a conventional plug. The smart adapter 200A comprises the aforementioned smart socket 100A and connector pins 201.

Similarly, the first circuit path L1, on which an isolator F is disposed, is coupled to the connector pins 201. The second circuit path L2 is also coupled to the connector pins 201. The circuit path switch S is configured to switch between the first circuit path L1 and the second circuit path L2 based on whether the plug inserted into the smart adapter is a conventional plug or a smart plug.

In this embodiment, as the plug is a conventional plug, the circuit path switch S switches to the first circuit path L1. The isolator F then filters out noise generated by a conventional appliance via the conventional plug on the first circuit path L1.

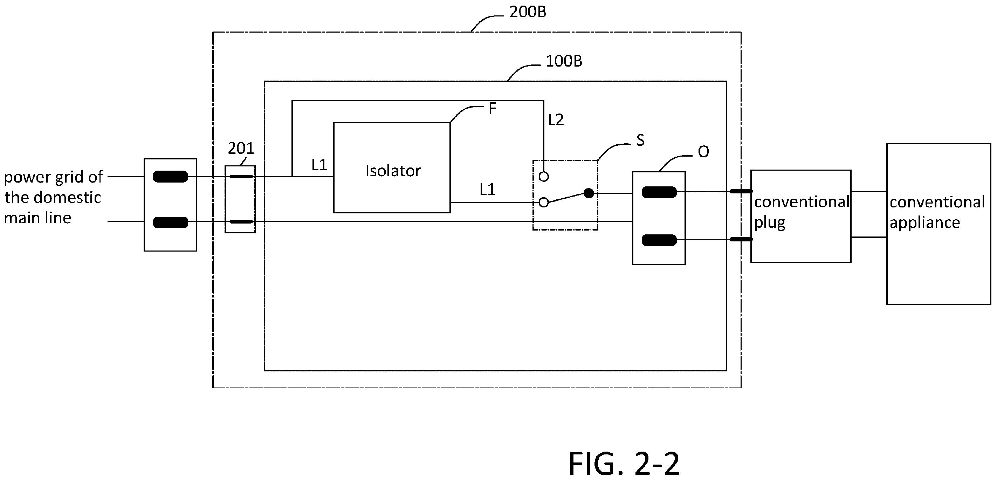

Referring to FIG. 2-2, FIG. 2-2 is a schematic diagram illustrating another embodiment of a smart adapter 200B for optimizing domestic power communication quality, shown in use with a conventional plug. The smart adapter 200B comprises the aforementioned smart socket 100B and connector pins 201. The difference between FIG. 2-2 and FIG. 2-1 lies in that when a conventional plug is inserted into the smart adapter 200B, only the ground wire is coupled through the first circuit path L1 to the isolator F. The remaining principles are the same as those previously described and will not be reiterated here.

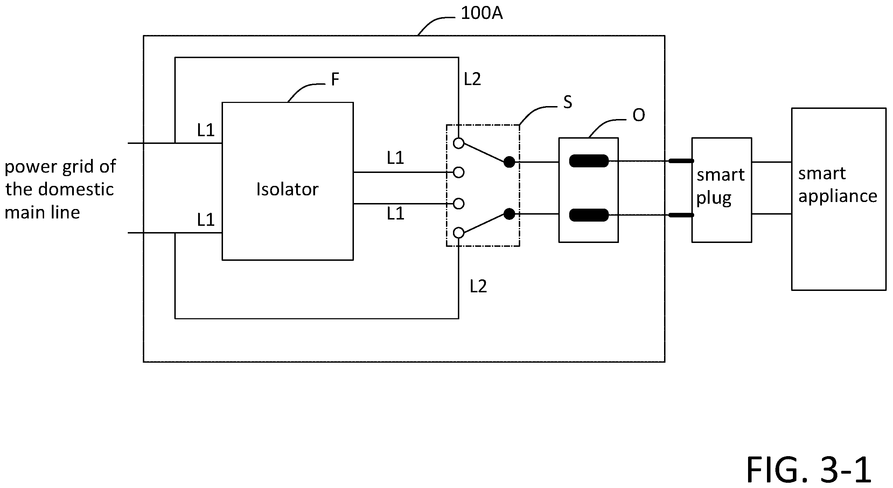

Referring to FIG. 3-1, FIG. 3-1 is a schematic diagram illustrating the use of the smart socket 100A with a smart plug (connected to a smart appliance) according to an embodiment. In this embodiment, the smart plug is electrically connected to the socket outlet O of the smart socket 100A. Both the ground wire and the live wire of the smart plug are coupled through the second circuit path L2 directly to the power grid, bypassing the isolator F. The remaining principles are the same as those previously described and will not be reiterated here.

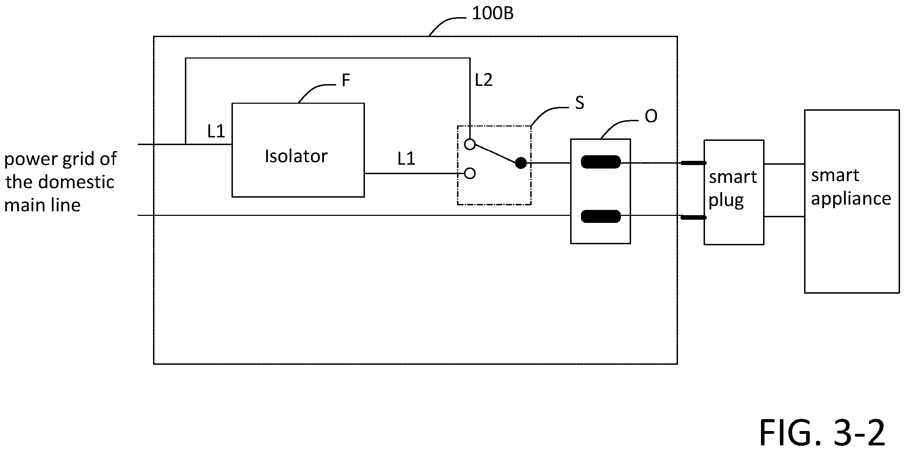

Referring to FIG. 3-2, FIG. 3-2 is a schematic diagram illustrating the use of the smart socket 100B with a smart plug (connected to a smart appliance) according to another embodiment. In this embodiment, the smart plug is electrically connected to the socket outlet O of the smart socket 100B. The ground wire of the smart plug is coupled to the power grid through the second circuit path L2, bypassing the isolator F. The live wire is directly coupled to the power grid and is also not coupled to the isolator F. The remaining principles are the same as those previously described and will not be reiterated here.

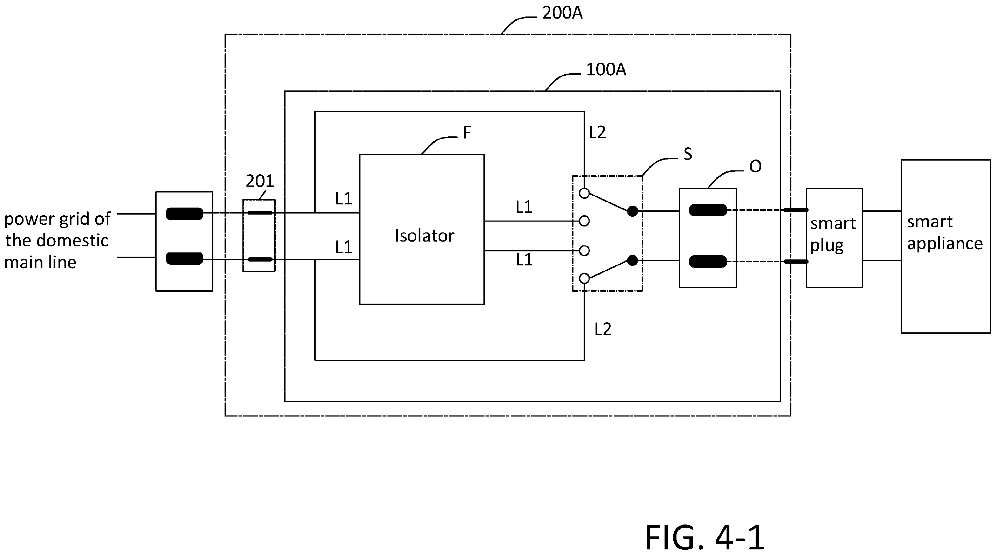

Referring to FIG. 4-1, FIG. 4-1 is a schematic diagram illustrating an embodiment of a smart adapter 200A for optimizing domestic power communication quality, shown in use with a smart plug. In this embodiment, when the plug is a smart plug, the circuit path switch S switches to the second circuit path L2, thereby bypassing the isolator F. Both the ground wire and the live wire are consequently routed through the second circuit path L2. The remaining principles are the same as those previously described and will not be reiterated here.

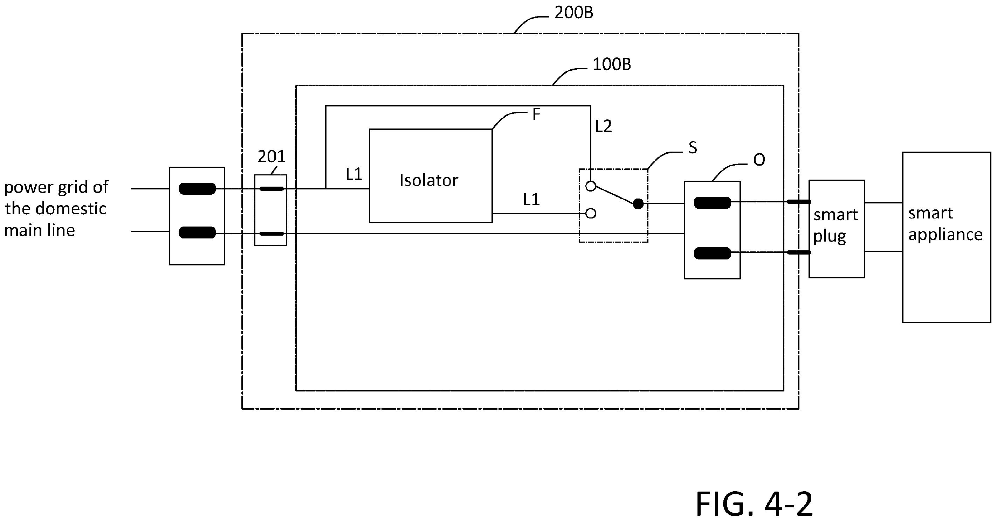

Referring to FIG. 4-2, FIG. 4-2 is a schematic diagram illustrating an embodiment of a smart adapter 200B for optimizing domestic power communication quality, shown in use with a smart plug. The difference between FIG. 4-2 and FIG. 4-1 lies in that when a smart plug is inserted into the smart adapter 200B, only the ground wire is switched to the second circuit path L2 to bypass the isolator F, while the live wire is directly coupled to the power grid. The remaining principles are the same as those previously described and will not be reiterated here.

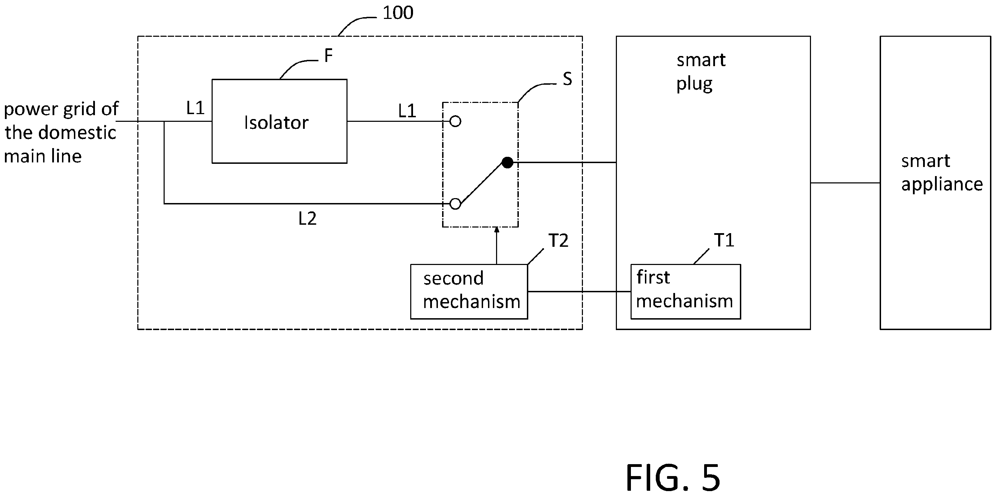

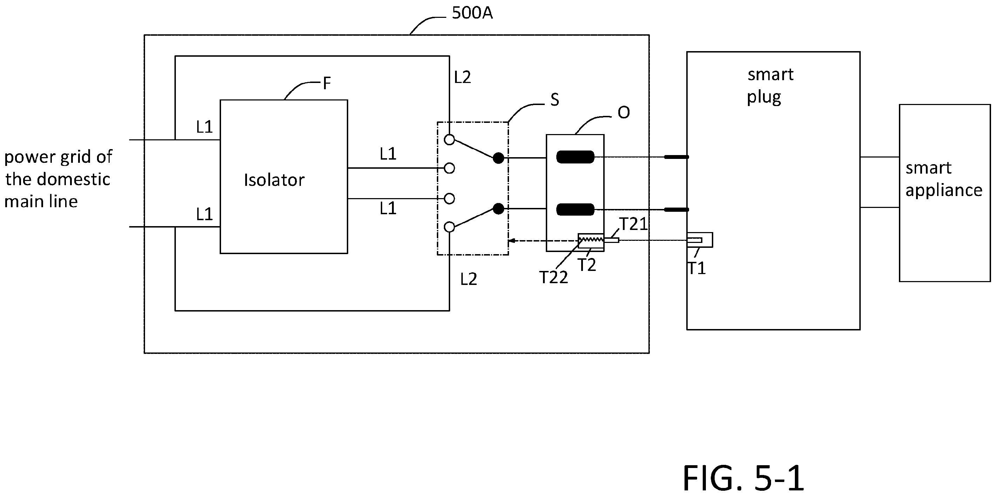

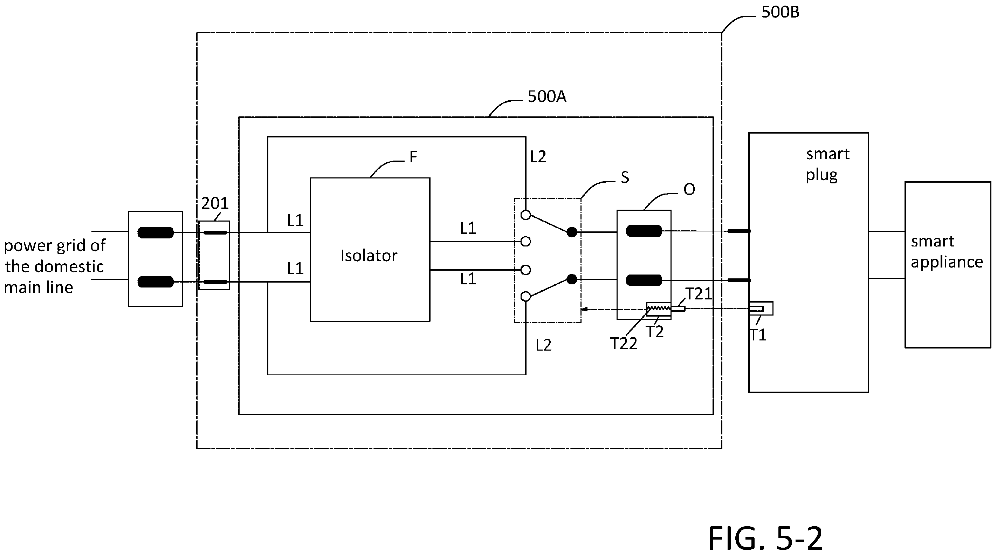

Referring to FIG. 5, FIG. 5 is a schematic diagram illustrating the mechanical structures of the smart socket and the smart plug. The smart plug includes a first mechanism T1, and the smart socket includes a corresponding second mechanism T2. When the smart plug is inserted into the smart socket, the first mechanism T1 triggers the second mechanism T2, causing the circuit path switch S to switch to the second circuit path L2.

Specifically, the smart plug, via its first mechanism T1, triggers a corresponding second mechanism T2 on the smart socket to actuate the circuit path switch S. The first mechanism T1 and the second mechanism T2 may be of mechanical, spring-loaded contact, magnetism suction, or similar design. Since a conventional plug does not have the first mechanism T1, it cannot trigger the second mechanism T2, and thus does not cause the circuit path switch S to switch. In other words, the smart plug incorporates this additional mechanism (T1), which is designed to interact with the corresponding mechanism (T2) on the smart socket and thereby controlling the switching of the circuit path switch S.

Referring to FIG. 5-1, FIG. 5-1 is a schematic diagram illustrating the mechanism of a smart socket 500A and a smart plug. In this embodiment, the first mechanism T1 is a recess structure, and the second mechanism T2 comprises a protrusion structure T21 and an elastic structure T22. The protrusion structure T21 and the recess structure of the first mechanism T1 are on the same horizontal plane and configured to engage with each other. The elastic structure T22 is connected to the protrusion structure T21. When the elastic structure T22 is in a non-compressed state, the protrusion structure T21 projects from the surface of the second mechanism T2. Therefore, when the smart plug is inserted into the smart socket 500A, the protrusion structure T21 of the second mechanism T2 enters the recess structure of the first mechanism T1, thereby triggering an action associated with the second mechanism T2 (or simply "thereby triggering the switch S") which causes the circuit path switch S to switch to the second circuit path L2. In this embodiment, both the ground wire and the live wire are switched to the second circuit path L2. The remaining principles are the same as those previously described and will not be reiterated here.

Since a conventional plug does not have the recess structure of the first mechanism T1, the protrusion structure T21 of the second mechanism T2 is pressed by the surface of the conventional plug when inserted. This causes the elastic structure T22 to be compressed, retracting the protrusion structure T21 into the second mechanism T2. As a result, the switching action associated with the second mechanism T2 is not triggered, and thus the circuit path switch S does not switch to the second circuit path L2. Consequently, the conventional plug remains coupled through the first circuit path L1. In other words, when the elastic structure T22 is in a compressed state, part or all of the protrusion structure T21 is located within the second mechanism T2.

Referring to FIG. 5-2, FIG. 5-2 is a schematic diagram illustrating the mechanism of a smart adapter 500B and a smart plug. In this embodiment, the smart plug has the first mechanism T1, which is a recess structure. The second mechanism T2 of the smart adapter 500B comprises a protrusion structure T21 and an elastic structure T22. The protrusion structure T21 and the recess structure of the first mechanism T1 are on the same horizontal plane and configured to engage with each other. The elastic structure T22 is connected to the protrusion structure T21. When the elastic structure T22 is in a non-compressed state, the protrusion structure T21 projects from the surface of the second mechanism T2. Therefore, when the smart plug is inserted into the smart adapter 500B, the protrusion structure T21 of the second mechanism T2 enters the recess structure of the first mechanism T1, thereby triggering an action associated with the second mechanism T2 (or: thereby triggering the switch S), which causes the circuit path switch S to switch to the second circuit path L2. In this embodiment, both the ground wire and the live wire are switched to the second circuit path L2. The remaining principles are the same as those previously described and will not be reiterated here.

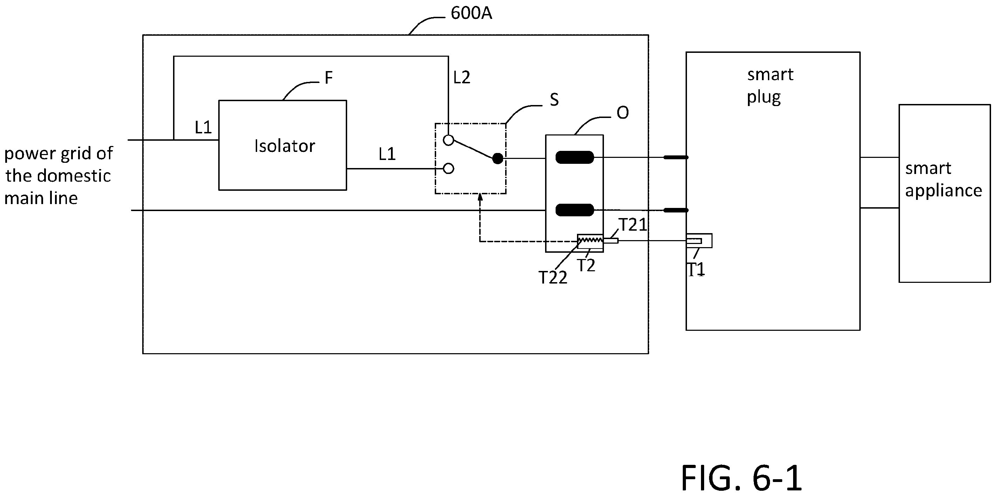

Referring to FIG. 6-1, FIG. 6-1 is a schematic diagram illustrating the mechanism of a smart socket 600A and a smart plug according to an embodiment. The difference between this embodiment (FIG. 6-1) and the embodiment shown in FIG. 5-1 lies in that when the smart plug is inserted into the smart socket 600A, only the ground wire is switched to the second circuit path L2. The remaining principles are the same as those previously described and will not be reiterated here.

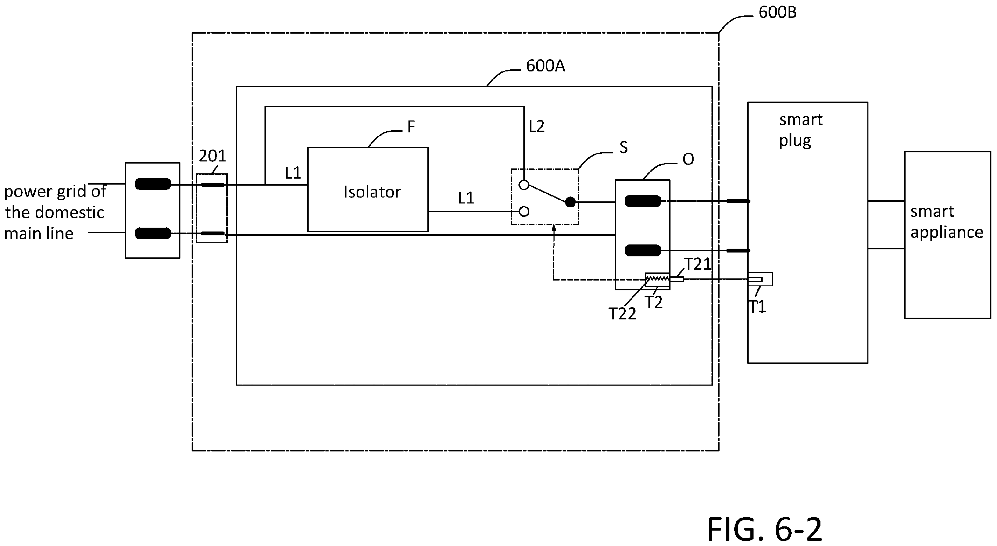

Referring to FIG. 6-2, FIG. 6-2 is a schematic diagram illustrating the mechanism of a smart adapter 600B and a smart plug according to an embodiment. The difference between this embodiment (FIG. 6-2) and the embodiment shown in FIG. 5-2 lies in that when the smart plug is inserted into the smart adapter 600B, only the ground wire is switched to the second circuit path L2. The remaining principles are the same as those previously described and will not be reiterated here.

## Claims

1. A smart socket for optimizing the quality of domestic power line communication, comprising:
a first circuit path coupled to a power grid, and an isolator is disposed on the first circuit path;
a second circuit path coupled to the power grid and bypassing the isolator; and
a circuit path switch configured to switch between the first circuit path and the second circuit path based on whether a plug inserted into the smart socket is a conventional plug or a smart plug;
wherein, when the plug is the conventional plug, the circuit path switch switches to the first circuit path, and the isolator filters out noise generated by a conventional appliance via the conventional plug on the first circuit path; and
when the plug is the smart plug, the circuit path switch switches to the second circuit path, wherein the second circuit path does not include the isolator, such that the smart plug is directly coupled to the power grid.

2. The smart socket of claim 1, wherein the smart plug comprises a first mechanism; the smart socket comprises a second mechanism; and
when the smart plug is inserted into the smart socket, the first mechanism triggers the second mechanism, thereby causing the circuit path switch to switch to the second circuit path.

3. The smart socket of claim 2, wherein the first mechanism is a recess structure; the second mechanism comprises a protrusion structure and an elastic structure; the protrusion structure and the recess structure of the first mechanism are on a same horizontal plane and configured to engage with each other; the elastic structure is connected to the protrusion structure; when the elastic structure is in a non-compressed state, the protrusion structure projects from a surface of the second mechanism; and when the elastic structure is in a compressed state, part or all of the protrusion structure is located within the second mechanism.

4. The smart socket of claim 3, wherein when the smart plug is inserted into the smart socket, the protrusion structure of the second mechanism enters the recess structure of the first mechanism, thereby triggering the second mechanism and causing the circuit path switch to switch to the second circuit path.

5. A smart adapter for optimizing the quality of domestic power line communication, comprising a smart socket; a connector pin; and wherein the smart socket comprises:
a first circuit path coupled to the connector pin, and an isolator is disposed on the first circuit path;
a second circuit path coupled to the connector pin and bypassing the isolator; and
a circuit path switch configured to switch between the first circuit path and the second circuit path based on whether a plug inserted into the smart socket is a conventional plug or a smart plug;
wherein, when the plug is the conventional plug, the circuit path switch switches to the first circuit path, and the isolator filters out noise generated by a conventional appliance via the conventional plug on the first circuit path; and
when the plug is the smart plug, the circuit path switch switches to the second circuit path, wherein the second circuit path does not include the isolator, such that the smart plug is directly coupled to the connector pin.

6. The smart adapter of claim 5, wherein the connector pin is configured to couple the smart adapter to a power grid via an electrical socket.

7. The smart adapter of claim 5, wherein the smart plug comprises a first mechanism; the smart socket comprises a second mechanism; and
when the smart plug is inserted into the smart socket, the first mechanism triggers the second mechanism, thereby causing the circuit path switch to switch to the second circuit path.

8. The smart adapter of claim 7, wherein the first mechanism is a recess structure; the second mechanism comprises a protrusion structure and an elastic structure; the protrusion structure and the recess structure of the first mechanism are on a same horizontal plane and configured to engage with each other; the elastic structure is connected to the protrusion structure; when the elastic structure is in a non-compressed state, the protrusion structure projects from a surface of the second mechanism; and when the elastic structure is in a compressed state, part or all of the protrusion structure is located within the second mechanism.

9. The smart adapter of claim 8, wherein when the smart plug is inserted into the smart socket, the protrusion structure of the second mechanism enters the recess structure of the first mechanism, thereby triggering the second mechanism and causing the circuit path switch to switch to the second circuit path.
